# EUROPEAN PATENT APPLICATION

(11) **EP 1 686 479 A2**
(43) Date of publication of application: **02.08.2006**
(21) Application number: 05254989.6
(22) Date of filing: 11.08.2005
(51) Int. Cl.: G06F 11/25

(54) **Transfering information from high functionality probe to logic analyzer**

(30) Priority: 30.12.2004 US 27116
(71) Applicant: INTEL CORPORATION, Santa Clara, CA 95052 (US)
(72) Inventor: Glass, Richard, Olympia, WA 98512 (US); Navada, Muraleedhara, Santa Clara, CA 95051 (US)
(74) Representative: Molyneaux, Martyn William

(57) **Abstract**

A method is described that comprises transporting information that was captured from a point-to-point link by dividing the information into separate pieces and sending each of the separate pieces over its own point-to-point link toward a logic analyzer host. The point-to-point link is part of a link based computing system.

## Description

### Field of Invention

The field of invention relates generally to debug/validation/testing tools for link-based computing systems; and, more specifically, to an information transportation scheme for carrying data and control information from a high functionality probe to a logic analyzer for storage.

### Background

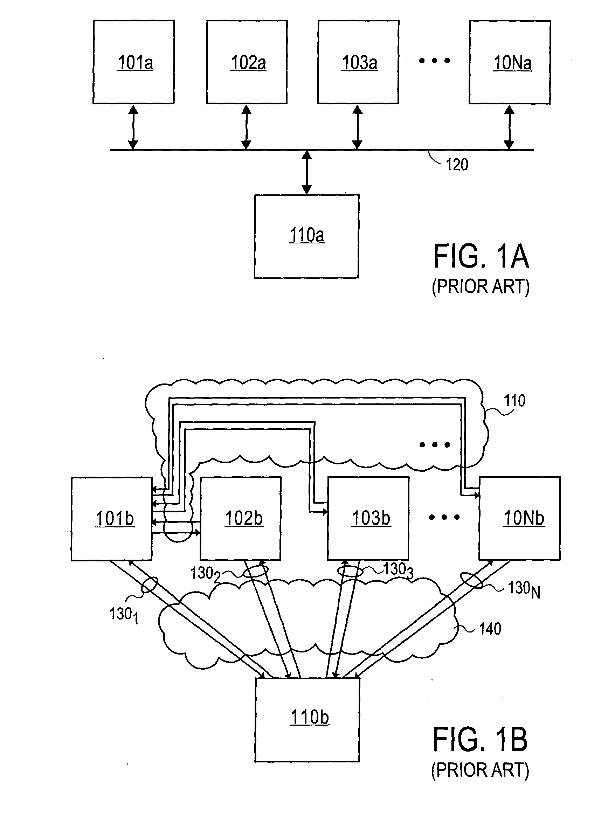

Figure 1a shows a depiction of a bus 120. A bus 120 is a "shared medium", multi-drop communication structure that is used to transport communications between electronic components 101a - 10Na and 110a. Shared medium means that the components 101a - 10Na and 110a that communicate with one another physically share and are connected to the same parallel signals electronic wiring 120. That is, wiring 120 is a shared resource that is used by any of components 101a - 10Na and 110a to communicate with any other of components 101a - 10Na and 110a. For example, if component 101 a wished to communicate to component 10Na, component 101 a would send information along wiring 120 to component 10Na; if component 103a wished to communicate to component 110a, component 103a would send information along the same wiring 120 to component 110a, etc.

Computing systems have traditionally made use of multi-drop busses. For example, with respect to certain IBM compatible PCs, bus 120 corresponds to a PCI bus where components 101a - 10Na correspond to "I/O" components (e.g., LAN networking adapter cards, MODEMS, hard disk storage devices, etc.) and component 110a corresponds to an I/O Control Hub (ICH). As another example, with respect to certain multiprocessor computing systems, bus 120 corresponds to a "front side" bus where components 101a - 10Na correspond to microprocessors and component 110a corresponds to a memory controller.

Owing to an artifact referred to as "capacitive loading" and "nonuniform transmission line signal integrity degradation", busses are less and less practical as computing system speeds grow. Basically, as the capacitive loading of any wiring increases, the maximum speed at which that wiring can transport information decreases. That is, there is an inverse relationship between a wiring's capacitive loading and that same wiring's speed. Each component that is added to a wire causes that wire's capacitive loading to grow. Likewise, at increased frequencies, transmission lines forming the bus experience increased signal integrity degradation as result of topology complexities (discontinuities at branches and any other points where the impedance of the transmission line changes), high frequency losses in dielectrics, inter-signal coupling, and other high frequency effects. Thus, because busses typically couple multiple components, bus wiring 120 is typically regarded as being heavily loaded with capacitance as well as having other transfer rate limiting signal degradation problems.

In the past, when computing system clock speeds were relatively slow (for example, below 100MHz), the capacitive loading on the computing system's busses was not a serious issue because the degraded maximum speed of the bus wiring (owing to capacitive loading and other degrading effects) were still a fair match for transfer rates necessary to accommodate the computing system's internal clock speeds. The same cannot be said for at least some of today's computing systems. That is, with the continual increase in computing system clock speeds over the years, the speed of today's computing systems are reaching (and/or perhaps exceeding) the maximum speed capabilities of wires that are heavily loaded with capacitance and/or exhibit other high frequency degradation effects (such as bus wiring 120).

Therefore computing systems are migrating to a "link-based" component-to-component interconnection scheme. **Figure 1b** shows a comparative example of a point to point links interconnected system vis-à-vis the multi-drop configuration in **Figure 1a.** According to the approach of **Figure 1b,** computing system components 101a - 10Na and 110a are interconnected through a network 140 of high speed bi-directional point-to-point links 130₁ through 130_{N} . Each point-to-point link comprises a first unidirectional point-to-point link that transmits information in a first direction and a second unidirectional point-to-point link that transmits information is a second direction that is opposite that of the first direction. Because a unidirectional point-to-point link typically has a single endpoint, and a simple un-branched topology, its capacitive loading and other high frequency degradation effects are substantially less than that of a shared media bus.

Each unidirectional point-to-point link can be constructed with copper or fiber optic cabling and appropriate drivers and receivers (e.g., single or differential line drivers and receivers for copper based cables; and LASER or LED Electrical/Optical transmitters and Optical/Electrical receivers for fiber optic cables, etc.). The network 140 observed in **Figure 1b** is simplistic in that each component is connected by a point-to-point link to every other component. In more complicated schemes, the network 140 has additional elements such as link repeaters and/or routing/switching nodes. Here, every component need not be coupled by a point-to-point link to every other component Instead, hops across a plurality of links may take place through routing/switching nodes in order to transport information from a source component to a destination component. Depending on implementation, the routing/switching function may be stand alone within the network or may be integrated into a substantive component of the computing system (e.g., processor, memory controller, I/O unit, etc.).

In bus based computing systems, logic analyzers have been used to "snoop" a bus within the computing system to de-bug the informational flows that transpire within the computing system. Because of the emergence of link based computing systems, however, new logic analyzer designs are appropriate.

### Summary

According to a first aspect of this invention there is provided a method as claimed in claim 1 herein.

According to a second aspect of this invention there is provided an apparatus as claimed in claim 11 herein.

Preferred features of the invention are defined by the dependent claims.

### Figures

The present invention is illustrated by way of example and not limitation in the figures of accompanying drawings, in which like references indicate similar elements and in which:

**Figure 1a** shows components interconnected through a multi-drop bus;

**Figure 1b** shows components interconnected through a network of point-to-point links;

**Figure 2** shows a logic analyzer probing architecture for forwarding information extracted from a probed point-to-point link within a link based computing system from a link traffic capture and protocol decoding front end via a specialized serial link to a back end, typically outside the observed system, for trace storage;

**Figure 3** shows a parallel packet information content format that the architecture of **Figure 2** may be designed to forward downstream from the probed point-to-point link to the storage module(s);

**Figure 4** shows an example of transfer packets sent from a link side interface to a host side interface;

**Figure 5** shows an example of the signaling protocol/format that the architecture of **Figure 2** may be designed to implement as it passes parallel packets downstream.

### Detailed Description

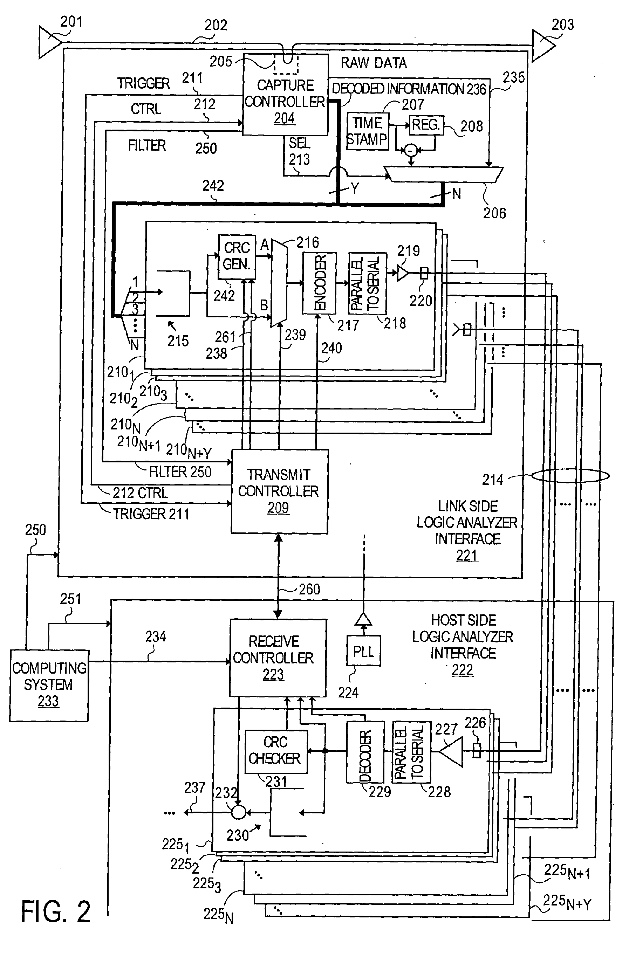

**Figure 2** shows a logic analyzer probing architecture for forwarding information extracted from a probed point-to-point link within a link based computing system. According to the depiction of **Figure 2**, link 202 corresponds to any uni-directional point-to-point link within a link based computing system having a corresponding driver 201 and receiver 203. The probing architecture includes: 1) a link-side logic analyzer interface 221; 2) a host side logic analyzer interface 222; and, 3) a plurality of point-to-point links 214 between the interfaces 221, 222. As will be described in more detail below, the point-to-point links 214 allow the portion of the logic analyzer (e.g., computing system 233) that is responsible for actually displaying to a user its measurement results to be physically separated from the link side logic analyzer interface 221.

Because link based computing systems have the potential to be spread out over distances that exceed those of traditional bus based computing systems, allowing the probed links to be physically separated from a logic analyzer's "host" (e.g., its mainframe, display, user interface, and/or control center) allows the traffic that is passed within the traced link based computing system to be monitored from a central location whereas the links themselves that are being probed are actually spread out over significant distances. Also, the plurality of links 214 allows information that is collected from the probed link 202 to be passed "downstream" (i.e., away from the link and deeper within the logic analyzer) at a high rate of speed in the form of "transfer" packets. As such, high performance logic analyzers can be realized.

A perspective of the architecture of **Figure 2** is that a highly intelligent device, referred to as a capture controller 204, sits "out at the probed link" 202. That is, the capture controller 204 is located on the logic analyzer interface 221 that is physically coupled to the link 202 being probed. In an embodiment, the capture controller 204 (or circuitry between the capture controller and the link 202) includes a power splitter and re-driver 205 circuit that: 1) splits the signal driven by driver 201 into a pair of signals; and, 2) of these pair of signals, re-drives a first signal across the remainder of link 202 to receiver 203 and directs a second signal into the capture controller 204 so that the link's informational content can be probed. Such a circuit allows for full visibility into the link 202 while not imposing a prohibitive propagation delay into the link as between driver 201 and receiver 203.

In an embodiment, the link specific, "protocol aware" capture controller 204 is capable of performing the following functions: 1) recognizing packet boundaries and individual packets on link 202; 2) understanding the content of the headers of the packets on link 202; 3) identifying the existence of particular "looked for" packets on link 202 as control for packet capture filtering and for detection of trigger events (as a consequence of capture controller 204 being programmatically told to look for a specific packet types, by matching packet headers or having specific data payloads on link 202); 4) providing capture for trace of information found within the payload and/or header of a packet that has appeared on link 202; 5) understanding the state of the link (e.g., "initialization", "down", "active", etc.); 6) providing one or more "trigger" signals 211 to downstream circuitry that signifies a looked for event (such as the appearance on the link of a particular looked for packet or sequence of packets) has occurred (note: along with the trigger signal itself the capture controller 204 would also provide additional information such as decodes of particular parts of the payload of the looked for packet or the identity or type of the looked for packet) as decoded information, and 7) indicating if individual or periods of packet sequences are to be stored or have been dropped, producing a gap in the data stream, with gap timing measured and passed along as a timestamp value at the end of each gap.

Accordingly, referring to the inputs and outputs of the capture controller 204 that is observed in **Figure 2**, the "raw data" output 235 corresponds to the output where the header and/or payload information of a packet that has appeared on link 202 is presented; and, the "decoded information" output 236 corresponds to the output where the identity of a particular type of packet that has appeared on the link (e.g., a link initialization packet, a request packet used within the link-based computing system, data packet used within the link-based computing system, a control packet used within the link-based computing system, etc.) is presented or a particular type of link event or state (e.g., active, initialization, re-initialization, etc.) is presented. Trigger output 211 is used to provide the aforementioned trigger signal.

Filter output 250 is used to signal for each received packet as to whether a valid packet or timestamp vs. a filtered gap appears at that point in time, Only valid packets and timestamps are accumulated in queue 215 to be passed across the link 214 as transfer packets for storage under control of the transmit controller 209. Control input 212 is used to program the capture controller 204 to look for certain packets/events on link 202 and provide decodes of link 202 information at outputs 235/236/211/250 in response thereto. Communication inputs 251, 252 from the host 233 to both the link side 221 and host side 222interfaces are to allow setting these and other parameters in each, respectively.

It is envisioned that the entire link side logic analyzer interface 221, including the capture controller 204, would be implemented with a high density logic semiconductor device (e.g., such as an ultra or very large scale integrated circuit made with CMOS circuitry (e.g., an ASIC)). It will be appreciated that specific design details concerning the capture controller 204 need not be presently discussed not only because the present application is directed to the manner in which information provided by the capture controller 204 is forwarded downstream within the logic analyzer; but also, because those of ordinarily skill would be able to design a capture controller that performs the above described functions without undue experimentation.

The system link 202 packet raw data 235 of the capture controller 204 and an input of filtered period elapsed time, calculated from the current value from timestamp 207 and a previously saved value of timestamp 207 via register 208, are inputs to a multiplexer 206 that selects one or the other of these for passing to the queue in the transmit processing chains 210.

According to typical operation, it would be common for capture controller 204 to sit for periods of time waiting for particular "looked for" packets to appear on link 202 to be traced, vs. packets that are not currently of interest (i.e. idle packets or packets not sourced or addressed to particular target system link agents/functions) which would not be traced. For example, if the capture controller 204 was programmed to identify and capture only each time packets having command = "ABC" and with data payload = "012...7" appear on link 202; and, if packets having "ABC" + "012... 7" appeared on link 202 only every so often (e.g., every 5 milliseconds.); then, the capture controller 204 would only have packet information to store every so often. The time stamp structures 207, 208 are used to provide precise measurement and storage into the trace of the amount of time that has elapsed between substantive capture controller outputs.

That is, continuing with the present example, if 5 milliseconds elapsed between the first and second instances of a packet on link 202 having "ABC" + "012...7"; then, the time stamp structures 207, 208 would be used to forward the fact that 5 milliseconds had elapsed on the link between the arrival of the first packet and the arrival of the second packet by capture controller 204. In a specific embodiment, the timestamp of an elapse time of 5 milliseconds would be forward downstream from the link-side interface 221 to the host-side interface 222 along with the indication of the content and decodes of the second packet.

That is, from the perspective of the host-side interface 222, the host-side interface 222 would first receive an indication of the arrival of the first packet (i.e. the content and decode of that packet). Then, sometime later (approximately 5 milliseconds later), the host-side interface 222 would receive first the timestamp value of 5 milliseconds followed immediately by the second packet content and decode information. The logic analyzer could then interpret this information flow to mean that the second packet arrived 5 milliseconds after the first packet as measured on link 202.

The timestamp structure itself works as follows. The local device time counter value (timestamp) at which the most recent looked for (i.e. non-filtered) characteristic packet appeared on link 202 is stored into register 208. Thus, if the first packet having "ABC" + "012...7" appeared on link 202 at absolute time 1.020 seconds; then, a value of 1.020 would be stored in register 208 upon the appearance of the first packet and would remain there until after the appearance of the second packet.

In response to the appearance of the second packet at device measured absolute time 1.025 seconds (i.e., 5 milliseconds after the appearance of the first packet), the capture controller 204 would select the timestamp input of multiplexer 206 so that the elapsed time (prior timestamp value minus current timestamp value) could be forward downstream to the host-side interface 222. Subsequently, the new absolute time of 1.025 seconds would be forwarded to register 208 to update register 208 with the absolute time of the appearance of the most recent looked for characteristic on link 202.

Note that it would be expected that the arrival of both the first and the second packets with payload of "ABC" + "012...7", as indicated by asserting the filter signal 250 to the "enable capture" state from the capture controller 204, would cause the transmit controller 209 to store first a timestamp delay value and then the following unfiltered link packets in the queue 215 for transmission downstream . That is, upon the appearance of the first packet on link 202, the capture controller would issue both a filter = "enable capture" value on filter line 250 and select using signal 213 to multiplexer 206 to pass packet content and decodes at output 235 of each packet having of "ABC" + "012...7" to the queue 215. In response to the filter signal indicating "enable capture", the transmit controller 209 would store the information on bus 242 in the queue 215. At the same time, the capture controller would cause the timestamp counter 207 value with absolute time of 1.025 seconds to be entered into register 208.

Upon the appearance of the second packet on link 202, the capture controller 204 would during the period corresponding to the last filtered packet, select the time stamp delay input (difference between current and previously entered timestamp values) to be output by multiplexer 206, and then in the period corresponding the second packet would select input 235 to multiplexer 206. For each of these the capture controller would again issue a filter signal asserted to "enable capture" on line 250 In response to the assertion of the filter signal, in an embodiment, the transmit controller 209 would store the passed elapsed delay and then the packet into the queue 215 for transmission to the host side interface as soon as enough data is available in the queue.

As such, the host side interface 222 would receive both an indication that 5 milliseconds has elapsed on link 202 and the content of the second packet. Thus, the logic analyzer host could properly put together the fact that packets having payload of "ABC" + "012...7" appeared on link 202 spaced apart by a time period of 5 milliseconds. An absolute time of 1.025 seconds would also be forwarded into register 208 to prepare for the third arrival of the looked for packet. The process described above for the second packet would then repeat for each appearance of a looked for packet on link 202.

Note that conceivably the capture controller 204 could be configured to simultaneously look for multiple types of packets or events on link 202. For example, the capture could be configured to look for both packets having payload "000... 0" and packets having payload "000...1". If so, the operation could be identical as described above with the exception of the information provided at output 235 and combined with outputs 236 in bus 242 of the capture controller. That is, if the first packet had payload "000...0" and if the second packet had payload "000... 1", output 236 would indicate a detected packet of payload "000...0" for the first packet (as described above) but would instead indicate a packet of payload "000...1" for the second packet, while raw data output 235 would contain the actual packet content for each.

With other operations being the same as described above, the logic analyzer host could properly understand that a packet having payload "000...1" appeared on link 202 with a delay equal to that passes as the timestamp delay after a packet having payload "000...0" appeared on link 202. In both of the examples above, although output 235 would have been used to indicate the precise payload content of the packets. It was assumed that the decoded information 236, with identity of the looked for packets, could be identified with either an encoded values (e.g., 00 = payload of "000...0"; 01 = payload of "000...1") or individual decoded packet identifiers ("match") bits.

The routing of the timestamp information and the substantive information from outputs 235 or timestamp delay from multiplexer 206 and decoded information 236 passing directly to bus 242 of the capture controller 204 through the transmit channel processing chains for transmission over links 214 as transfer packets is next described. In an embodiment, the passing of information from the link-side interface 221 to the host-side interface 222 can be viewed as "widthwise" packets. That is, each link amongst links 214 is viewed as a lane that is used to transport different piece(s) of a transfer packet that is transported in parallel across the parallel links 214 up to host side interface 222.

Here it is to be understood that although the widthwise LAI to host packets being transported from interface 221 to interface 222 could conceivably carry the full, identical content to those packets that are captured from link 202 (e.g., an entire packet captured from link 202 is presented at capture controller output 235 and routed widthwise across subset of links 214 up to interface 222), due to providing transport of decoded information and/or other auxiliary information, in all cases the widthwise transfer packets that are routed across links 214 up to interface 222 are something other than a simple exact copy of the packet to which they reference that appeared on link 202.

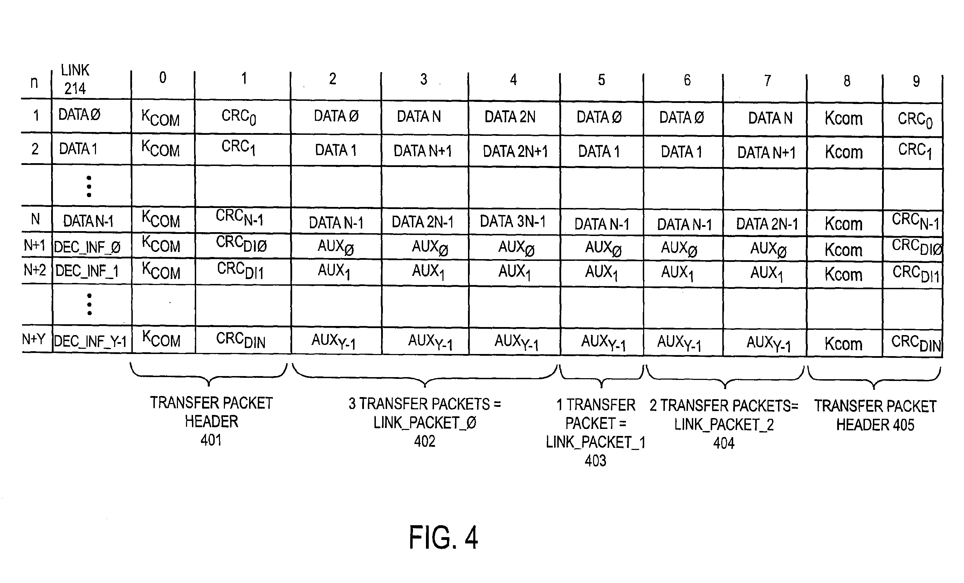

Specifically, these transfer packets carry not only the target link packet content, but also selected decodes (triggers) from the packets and timestamps, as well as link 214 control and error detection information. Likewise, a target system link 202 packet may be composed of a number of primitive transfer packets on the system link 202 and therefore have a larger total content than can be carried in a single link 214 transfer packet transmission from the link interface 221 to host side 222 logic. In such cases the transfer shall require packing sequential system link 202 packets into multiples of the link side 221 to host side 222 transfer packets appearing on link 214 (e.g., as seen in region 402 of **Figure 4**).

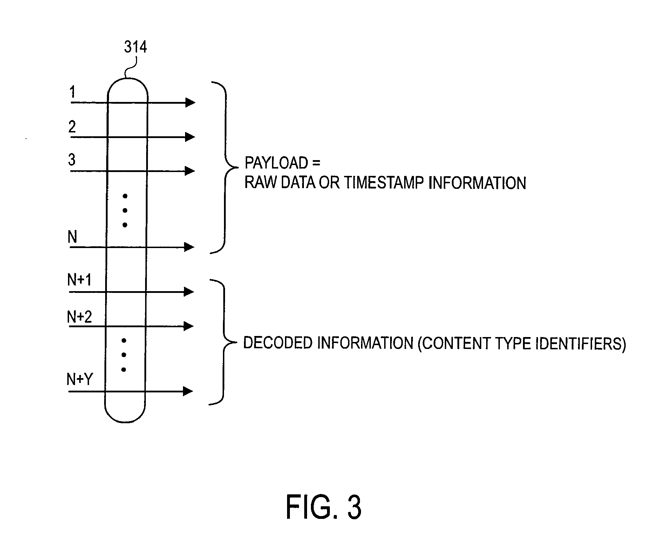

**Figure 3** shows an embodiment of a widthwise transfer packet that may be presented across links 214. Referring to both **Figures 2** and **3**, the width of the width wise transfer packet is N+Y units of encoded data (e.g., N+Y encoded bytes of data) where the payload is N units of encoded system link raw data or timestamp delay (selected through multiplexer 206) and the decoded information is Y units of encoded data originating from the capture controller 204 as decoded information 236. Thus, as observed in **Figure 3**, the payload 301 of the widthwise transfer packet consume lanes 1 through N and the decoded information 302 of the widthwise transfer packet consumes lanes N+1 through N+Y. Links/lanes 214 of **Figure 2** correspond to links/lanes 314 of **Figure 3**. A unit of encoded data is the result of encoding some fixed amount of data. For example, in the case of 8B/10B encoding, a unit of encoded data is the 10 bits that result from the encoding of a byte of data.

According to the approach of **Figures 2** and **3**, the payload 301 of the widthwise transfer packet transports the information (system link packet content 235 or elapsed timestamp value) provided by multiplexer 206 in parallel with the decoded system link information 236. That is, the payload of any particular widthwise transfer packet 301 transports either timestamp information or payload information from a packet captured on link 202, and always includes decoded information 235 from the capture controller 204.

Here, as each lane of lanes 1 to N carries a different piece of the widthwise transfer packet payload 301, it is self evident that the multiplexer 206 is divided into N sections, each of the N sections corresponding to a different one of N lane processing channels 210₁ through 210_{N}, and the corresponding payload lanes of links 214 to the host. As such, the multiplexer 206 output 242 is drawn initially (before merging with decoded information 235) as an N wide channel where each of the N sections corresponds to a different subset (unit) of data from multiplexer 206 to be encoded. The decoded information 236 is merged with the output of multiplexer 206 into bus 242 prior to reaching the lane processing channels 210ₙ₊₁ through 210_{N+Y}.

With respect to the "decoded information", which is represented as a Y wide channel, each unit of the Y section corresponds to a different subset (unit) of the decoded information 236. For example, in an embodiment, each of the N and Y sections corresponds to a different byte (8 bits) of information provided at the output of multiplexer 206 and the decoded information 236, respectively. Thus, if the number of link 214 lanes is 96, with 80 for payload and 16 for decoded information (i.e., N=80 and Y=16), then there are also 80 sections of the lane processing channels 210₁ through 210_{N} for the payload, each with 8 bit wide input and which receives inputs from 80 byte wide sections of multiplexer 206, combining link captured traffic 235 or timestamp. The remaining lane processing channels 210₈₁ through 210₉₆ for the remaining 16 lanes of link 214 receive receives inputs for decoded information 236 in the capture controller 204.

A transmit controller 209 is responsible for overseeing the flow of information that passes from the link-side logic analyzer interface 221 to the host-side logic analyzer interface 222. In particular, the transmit controller 209 recognizes when link 202 traffic, formatted as raw packets or timestamp delays in parallel with corresponding packet decode information, has accumulated in queue 215 to be encoded and transmitted downstream over link 214.

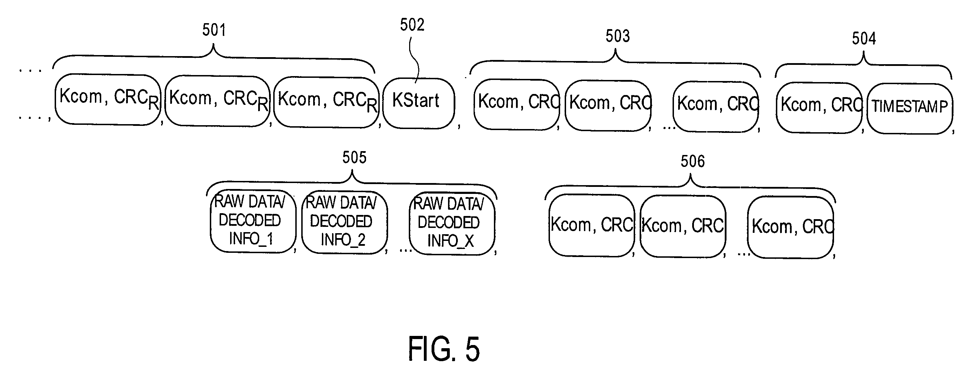

**Figure 2** shows in detail an embodiment of a lane processing channel 210₁ that is used for processing the first unit of data from amongst the N + Y units of data provided by the capture controller 204 via bus 242. As each set of information on bus 242 is indicated by the filter signal 250 to be valid for storage, the transmit controller stores that information into queue 215. The role of CRC generator 342 and multiplexer 216 will be described in more detail ahead with respect to **Figure 5.** Ignoring these items for a moment, units of information to be stored for host 233 are accumulated as they are queued in queue 215 and are eventually passed from queue 215 to encoder 217 for encoding.

Encoding schemes can be designed to include features that significantly reduce the likelihood of data corruption on a point-to-point link arising from unbalanced data patterns (e.g., "all 1s" or "all Os"). The most common type of encoding presently is 8b/10b although other types exist (e.g., 4b/5b, 64b/66b). An encoder is circuitry that is designed to perform an encoding function.

Once each unit of data is encoded it is passed through a parallel to serial converter 218 and driven by a driver 219 (perhaps through an electrical or fiber optic cable connector 220) over a circuit board or coaxial electrical or fiber optic cable of which links 214 are comprised. Note that in the case of copper cabling, the driven signal between interfaces 221, 222 may be differential or single ended. Given that the output bus 242 from the capture controller is divided into N + Y sections, it is assumed that each of processing channels 210₁ through 210_{N+Y} will send a corresponding encoded unit of data up to interface 222.

The host-side interface 222 will as necessary be able to properly align, through a suitable alignment protocol and mechanisms, the different pieces of a widthwise transfer packet's payload if they arrive at interface 222 at different times across the various lanes. A discussion of such a suitable alignment protocol is discussed in more detail ahead with respect to Figure 5. Note that in the case of fiber optic cabling, the different units of encoded data produced by the transmit processing chains may be wavelength division multiplexed onto a common fiber optic link (i.e., links 214 reduces to small number, or even a single physical link).

**Figure 4** shows an example of the flow of transfer packets across link 214. Link side transfer packets for link 214 are constructed simply through selection of an appropriate data structure (CRC, or packet data/decodings) through multiplexer 216 and then encoding by encoder 317, its serialization through serializer 219, and its being driven by driver 219 (perhaps through a connector such as connector 220) over its corresponding lane.

All transfer packet payload signal values including either raw packet data or timestamp delay substitution for target and parallel decode information as well as CRC are selected through multiplexer 216 by the transmit controller 209 using signals 239. Protocol control signals (Kcom and any others necessary for link training and host side storage synchronization, startup, and stopping) are selected by the transmit controller through control line 240 and the encoder 217 (i.e., the encoder 217 generates protocol control signals) simultaneously in all of the lane processing channels.

The correct selection of the appropriate CRC or queued packet payload/decodes through multiplexer 216 for each of the N+Y link lanes 214 are controlled by the transmit controller 209. The transmit controller 209 keeps track of packets loaded into the queue 215 and when enough are available to allow encoding selects sets of values for encoding and transmission to the host. If not enough queue data is available, the transmit controller instead transmits one or more Kcom + CRC pairs which corresponds to a transfer packet (e.g., as seen in region 401 of Figure 4) until there is again enough data in the queue to encode and transmit across the full width of the N+Y lanes.

When there is queue data in each lane, the transmit controller transmits the payload and decoded information across the full width of the N+Y lanes (e.g., as seen in regions 402, 403, 404 for first through third 402, fourth 403 and fifth 404 transfer packets, respectively, which correspond to, respectively, zero 402, first 403 and second 404 link packets observed on link 202).

This continues until the trigger signal 211 is asserted by the capture controller indicating that it is time to stop storing captured values, at which point the transmit controller starts transmitting only Kcom + CRC pairs (e.g., as seen in region 405 of Figure 4) indicating to the host interface that there is no further data to be stored (actually appearing identical to the transmission when there is no data being passed from the capture controller). Since the Kcom and CRC pairs (regions 401 and 405) are only link 214 control and error detection overhead added, these are processed to insure synchronization and transfer integrity are maintained, but are not stored in the host side interface logic analyzer. As result, once the link side starts transferring continuous Kcom and CRC pairs, the host computer system 233 can at its leisure shut down capture in the host side interface 222 without having to precisely synchronize the shutdown of host side receive processing chains, allowing partitioning of the host side interface into multiple parallel devices such as commercial FPGAs.

Since all host side receive processing chains 225 receive the same control packets from link 214 at all times they easily establish and maintain perfect synchronization, even if the host side interface 222 is partitioned into independent devices each implementing some number of the receive processing channels (at reduced width vs. full link 214 width) and a duplicated full receiver controller 223 in each. The centralized control of trace capture/filtering/stop by the single link side interface 221 via the protocol passed on link 214, eliminates need for a partitioned host side interface to support high speed inter-device synchronization for triggering and capture control that are typical of prior art for this functionality.

Host interface partitions only need to signal each other if a persistent error is detected by any of the partitions, such as due to loss of symbol framing

on the incoming link which might lead to loss of synchronization between the received channels. Corrective action for such detected errors would require transmission via a single, or small number of signals 260 to allow the collective elements of a portioned host side interface 222 to request the single link side interface 221 to perform link 214 re-initialization and resumption of transfers.

With respect to **Figure 4**, when a Kcom and other control characters (Ktrain, Kstart) are transmitted, the same control character is transmitted on every lane so it can be easily decoded at full speed on each lane at the host end without requiring inter-lane decode interactions. Following each Kcom transmission (except during training), each lane transmits the accumulated CRC for that lane for all characters on that lane up to the Kcom, then resets for next accumulation period. More than one fixed length (dictated by link width) link 214 transfer packet may be required to carry a target system link packet to the host. This reflects the natural variable packet length likely on target system links. Auxiliary information (decode of link traffic defining content for each link 214 packet and carrying other information, such as produced triggers) is carried in fixed format in each packet (i.e. not accumulated over multiple transfer packets) even if it takes multiple transfer packets to carry a "long" target system packet to the host.

In **Figure 5**, communications between the link side interface 221 and the host-side interface 222 are "idle" over time period 501, with no substantive information sent from the link-side interface 221 to the host-side interface 222. For simplicity only a one-dimensional (single lane) depiction is shown. It should be apparent that the single dimensional view is replicates over each lane in the widthwise link 214. As depicted in **Figure 5**, during idle time periods, the pattern "Kcom, CRC_{R}" is continuously repeated 501 on all lanes simultaneously.

Note that in the particular sequence shown in the **Figure 5** example, the trace is shown as just starting, with partitioned or single host interface trace modules being forced into synchronization by a "START" control character 502 being transmitted on every lane at time 402. Prior to and following the Start character 502, transmission of the "Kcom, CRC_{R}" data patterns 501, 503, keeps the storage interface in the "idle" condition, i.e. no trace being stored, since no packet payload/decode is transferred A Kcom character, in an embodiment, is a COMMA, an 8b/10b K control character selected by transmit controller 209 using control signals 240, 340 for creation by the encoder 217, 317.

The Kcom character is a value provided by an encoder that is known (according to the encoding algorithm) to not correspond to any un-encoded data character. That is, encoding consists of taking un-encoded data and encoding it into a larger number of encoded data bits. Each possible pattern of un-encoded data is translated into a corresponding pattern of encoded data; where the encoded data patterns are constructed from a group of data patterns that is smaller than the full set of possible data patterns that could be constructed in light of the bit width of the encoded data patterns. Typically, balanced patterns (equal numbers of 1's and 0's in each allowed encoded value) are within the aforementioned group while unbalanced patterns are not within the aforementioned group.

In an embodiment, Kcom characters also come from the aforementioned group, but have different encodings than any of the data values and therefore are immediately identifiable as not corresponding to any data encodings. The Kcom character may therefore be used, as is the case in **Figure 5**, to signify control symbols rather than data are being sent. When it is appropriate to send a Kcom character, the transmit controller 209 activates lines 240 for each of the widthwise packet lanes and lines. This activation causes the encoder of each lane to transmit a Kcom character over its corresponding lane.

The CRC_{R} data structure is a Cyclic Redundancy Check (CRC) RESET value. Cyclic Redundancy Checks are data checking schemes. In various embodiments, a CRC scheme uses a specific mathematical function to calculate specific output values in response to specific input values. In the case of a stream of data, for each new piece of data (e.g., each new byte of data), the algorithm recalculates a new output value using the algorithm's previous output value and the new piece of data as an input value. When a sequence/stream of data has been transmitted, the calculated CRC for that sequence is sent along after it to a receiving end (in the case the host-side interface 222). If the receiving end can re-calculate a CRC value that matches the CRC value from the received data stream, the data is deemed "not corrupted" by the transmission process; while, if the receiving end re-calculate a different value that the sent CRC value from the received data stream, it is deemed "corrupted" by the transmission process.

A CRC RESET value (CRC_{R}) is the value at which the CRC value is set at the start of the CRC calculation process (i.e., the CRC output value to be used when the first piece of the data stream is submitted for CRC calculation). The CRC generators 242 are reset for all lanes, by the transmit controller 209 when it activates line 238, forcing the CRC generators 242 to be loaded with the CRC RESET value CRC_{R..} The CRC is reset each time the value of the CRC is selected for encoding, so that a new CRC value can be accumulated for following data bytes from the queue 215. Likewise, when a value is pulled from the queue 215 for encoding, at that point in time it is also appropriate for the CRC to calculate a new output value, as selected by the transmit controller 209 activating line 261.

The new CRC value is calculated from the prior CRC output value and the current value out of the queue 215. The CRC_{R} value is selected for including in the stream of bytes to be encoded by the transmit controller 209 activating line 239 cause channel A of multiplexer 216 to be selected. As a consequence, a CRC_{R} character will be encoded and transmitted over each lane of the link 214. By alternating between the activation of lines 240 for Kcom character generation and the activation of lines 261, 238 and 239 for CRC_{R} character reset, generation and selection as described just above, the transmit controller 209 will effectively transmit alternating Kcom and CRC_{R} characters as observed in **Figure 5** over time period 501.

In an alternate embodiment, rather than transmitting CRC_{R} characters to provide for error detection, only Kcom character is sent when no data is available in queue 215 for transmission. For this reduced logic approach the CRC generator 242 and multiplexer 216 are not needed during idle periods of transfer, but since these same mechanisms are required to support detection of corrupted non-idle data passed on the link, error detection would also be lost.

At some point the capture controller 204 is apt to send a trigger signal that a looked for item or event, signifying that tracing should cease, has appeared on link 202 with trigger decodes and link traffic passed via outputs 235, 236. In response to the trigger signal 211, the transmit controller 209 changes to a mode of sending the alternating Kcom and CRC on link 214.

In order signal to host interface device(s) 222 that tracing should start (i.e. to start synchronize storage of data at an internally programmed starting point in storage buffers, the transmit controller creates and send the Kstart widthwise transfer packet 502. This is typically done upon request of the host computer 233 by accessing and setting register bits (or by signaling using dedicated discrete lines 250, 251) to the transmit controller 209. Upon being requested, the transmit controller 209 simply activates lines 240 for each of lane processing channels 210₁ through 210_{N+Y} causing the encoder to produce the Kstart character 502 onto all lanes of link 214. As a consequence of these maneuvers, a START widthwise packet 502 will be forwarded up to the host-side interface 222. The host-side interface will be able to recognize the presence of the START packet 502 by receiving the Kstart character on every lane of link 214.

According to the specific protocol of **Figure 5**, a START widthwise packet is followed by repeated "Kcom, CRC_{R}" pairs 503 until there is trace data to transfer The "Kcom, CRC_{R}" pairs 503 allows the substantive data captured by the capture controller 204 (e.g., decoded data provided at output 236 and raw data from output 235 or timestamp delays) to be loaded into the queues 215. Upon having enough values in the queues 215 and following the next CRC transmission, the transmitter selects a data value from the queue in all lane processing channels 210₁ through 210_{N+Y} through multiplexer 216 of each of these channels, so that it is encoded, serialized and driven over its corresponding link.

In order to perform this operation, transmit controller 209 activates select line 239 of each of these channels to select channel B. Note that the presence of the timestamp delay value vs. captured raw system link packet 235 in the payload section of each packet 314 on link 214 is identified specifically by bits or encodings in fields of the decoded information provided by capture controller 204 and passed unmodified in the header 302 along with the payload. The transmit controller has no knowledge of or need to know whether the payload of a link 214 packet is system link raw data or timestamp delay value, since it handles all values passed into the queue 215 identically. Therefore the first values passed through the queue from the capture controller after transmission of the Kstart can be either timestamp value or raw data.

In the example of protocol shown in **Figure 5**, the substantive information captured starts after a Kcom, CRC and timestamp value 504 (after the Kcom,CRC pairs 503) and then is shown as a stream of X raw data payloads 505, with each of these also carrying the associated decoded information bits/fields, with all these packets being encoded, serialized, and forwarded via link 214 to the host-side interface 222. The series of widthwise raw data packets as depicted in **Figure 5** occur if the capture controller 204 supplies consecutive selection of the raw data through multiplexer 206. This could happen, for instance, if the capture controller 204 is programmed to forward each packet observed on link 202 after a first looked for packet is observed; or, if the substantive data used to describe an observed packet or event on link 202 exceeds the width of the output 242 of multiplexer 206.

In any case, each of the X widthwise packets 505 that carry substantive data up to host-side interface 222 are created by the transmit controller by forwarding values of substantive data from the input queue 215 from each of channels 1 through N as payload 301 and associated decode information from each of channels N+1 through N+Y as header 302 .

While the consecutive substantive data 505 widthwise packets are being sent, in an embodiment, a running CRC is value is calculated along each lane (e.g., by CRC generator 242 for lane 1). Once the substantive data from queue 215 reaches a point where not enough is left to continue encoding (either filtered by capture controller 204 or due to higher packet transfer rate for link 214 vs. maximum unfiltered packet rate on bus 242, the transmit controller suspends transmitting values from the queue and instead starts sending Kcom, CRC pairs 506. The first of these pairs following a sequence of values sourced from queue 215 will carry CRC for that preceding sequence of data values. Note that the Kcom occurs before the CRC values are transmitted, with the receiver channel processors 225 required to simply recognize the inclusion of Kcom to indicates that the next character shall be the accumulated CRC for each lane for the preceding sequence of values back to just after the prior CRC transmission. Note that CRC for each lane on 214 is carried in that lane, independent of, but occurring at the same time on the link as all other lanes.

In further embodiments a link training pattern is transmitted to train downstream SERDES, sent at link initialization and re-initialization in case of loss of link content integrity and request for retrain by storage modules; and/or, a repeated (Kcom,CRC) filler and synchronization check is used if no trace data to transfer CRC again carries checksum of payload (if any) preceding the Kcom.

Referring back to **Figure 2**, the host-side interface includes a receive controller 223 that is communicatively coupled to transmit controller 209 (e.g., through a bus or point to point link that operates at a slower speed than any of links 214). In an embodiment, the receive controller 223 sends commands to the transmit controller 209 for purposes of programming the capture controller 204. For example, the receive controller can send capture controller programming commands to the transmit controller 209 which in turn forwards these commands along control line 212 to the capture controller 204. By being cognizant of the programming commands, the transmit controller 209 may understand what the capture controller 204 has been programmed to do which may help the transmit controller 209 in constructing widthwise packet headers. The receive controller 223 may also be communicatively coupled to a computing system 223 which is responsible for overseeing the overall capture strategy upon link 202 as well as other links within a link based computing system (not shown in **Figure 2**).

Alternate implementations of mechanisms for data integrity checking could implement various approaches. In one embodiment the design could carry CRC or other data integrity check content as unique bit fields extending the width of the header 302 of each transfer packet 314. Another embodiment could calculate CRCs (or other type checksums) in the capture controller 204 which would multiplex the values during normally filtered packet times into the stream of values selected through bus 242, although this would require additional signaling from capture controller to transmit controller to cause a unique identifying Kcode to be sent preceding or following the CRC values on link 214 to maintain synchronization in the host interface 222.

The host-side interface 222 also includes a receive processing channel 225₁ through 225_{N+Y} for each of the N+Y channels. According to the embodiment of **Figure 2**, each receive processing channel includes: 1) connector 226 for coupling to the link of its corresponding lane; 2) a receiver 227; 3) a serial to parallel converter 228; 4) a decoder 229; 5) a CRC checker 231; and, 6) an output queue 230. For each of the N+Y lanes, the receive controller 223 is able to detect the presence of Kcom (and other Kcode such as Kstart) values from decoder 229 and therefore to determine location in the received stream for CRC_{R} values, to know when to check for comparison with locally recalculated CRC comparison with received CRC in the CRC checker 231 (or the output of decoder 229).

Therefore the receive controller 223 can detect idle transfers across all lanes. The receive controller 223 can also detect START widthwise packets by observing a receiving Kstart characters across all lanes. It is not necessary to recognize when timestamp packets arrive since these are simply stored, along with raw data packets into logic analyzer storage. The receiver controller can also check CRC values with the CRC checker 231. Once substantive data has been successfully received it can be stored in a local receive queue 230 prior to being either stored locally (into SRAM or DRAM arrays) or be passed to a conventional logic analyzer mainframe at a rate convenient to that device, for each of these cases employing conventional "values valid" strategies for accommodating the uneven flow coming from the probe link side interface, due to intermittent filtering that is featured in this architecture specifically to conserve trace storage space.

In the foregoing specification, the invention has been described with reference to specific exemplary embodiments thereof. It will, however, be evident that various modifications and changes may be made thereto without departing from the broader scope of the invention as set forth in the appended claims. The specification and drawings are, accordingly, to be regarded in an illustrative rather than a restrictive sense.

## Claims

1. A method, comprising:
transporting information that was captured from a point-to-point link that is part of a link based computing system by dividing said information into separate pieces and sending each of said separate pieces over its own point-to-point link toward a logic analyzer host.

2. The method of claim 1 further comprising sending additional derived information toward said logic analyzer host by dividing said additional derived information into additional separate pieces and sending said additional separate pieces along their own additional point-to-point links, said additional derived information characterizing said information.

3. The method of claim 2 wherein said information is raw data from a packet captured on said point-to-point link and said additional derived information identifies said information as being raw data captured from a packet on said point-to-point link.

4. The method of claim 2 wherein said additional derived information confirms that a looked for packet on said point-to-point link has been observed on said point-to-point link.

5. The method of claim 2 further comprising, along said point to point links and said additional point-to-point links, prior to said sendings, sending unique encodings on the said point to point links and said additional point to point links that tells said logic analyzer host that said point to point link and said additional point to point link temporarily carry other than said information and said additional derived information.

6. The method of claim 5 further comprising, along each of said point to point links and said additional point-to-point links, sending a comma character instead of said sending of said information that tells said logic analyzer host that said link based computing system information and said additional derived information are not currently available to send and said sending of said comma character on all lanes of said point to point and additional point to point links..

7. The method of claim 6 further comprising, along each of said point-to-point links and additional point to point links, sending on each lane a CRC value immediately following said sending of said comma character that provides said logic analyzer host with ability to detect corruption of said information and said additional derived information sent prior to the sending of the CRC values and said sending of said CRC value instead of said information and additional derived information.

8. The method of claim 1 wherein, prior to said sending, information derived from the time at which said information was captured is sent to said logic analyzer host.

9. The method of claim 8 further comprising, along said additional point-to-point links and in sending immediately preceding said sendings, sending information that tells said logic analyzer host that said information derived from the time at which said information was captured is carried in the said point to point links immediately prior to said sendings rather than said information.

10. The method of claim 9 sending a comma character between said sending of said information that tells said logic analyzer host that said information is about to arrive and said sending of said additional information.

11. An apparatus, comprising:
a logic analyzer link-side interface comprising:
a repeater or power splitter to capture a packet on a point-to-point link that is part of a link based computing system; and,
a plurality of drivers to drive separate pieces of information derived from said packet onto a plurality of point-to-point links that direct said information toward a logic analyzer host.

12. The apparatus of claim 11 further comprising a multiplexer between said repeater or power splitter and said plurality of drivers to select between information selected from the group consisting of:
raw data from said packet; and,
timing information derived from the time at which said packet was captured on said link.

13. The apparatus of claim 11 further comprising a separate queue for each link of said plurality of point-to-point links, said queue to store its own one of said separate pieces.

14. The apparatus of claim 13 further comprising another multiplexer for each link of said plurality of point-to-point links, said multiplexer to select between an output of its corresponding said queue and a CRC value.

15. The apparatus of claim 11 further comprising a separate encoder for each link of said plurality of point-to-point links, said encoder to encode its own one of said separate pieces.

16. The apparatus of claim 11 further comprising a separate serializer for each link of said plurality of point-to-point links, said serializer to convert its own one of said separate pieces from parallel to serial data.

17. The apparatus of claim 11 wherein said plurality of point-to-point links further comprise copper cables.

18. The apparatus of claim 11 wherein said plurality of point-to-point links further comprise fiber optic cables.

19. The apparatus of claim 18 wherein said drivers further comprise E/O drivers.
